# EUROPÄISCHE PATENTSCHRIFT

(11) **EP 3 064 424 B1**
(45) Veröffentlichungstag und Bekanntmachung des Hinweises auf die Patenterteilung: **08.05.2019**
(21) Anmeldenummer: 16000302.6
(22) Anmeldetag: 06.02.2016
(51) Int. Cl.: B62M 9/10

(54) **ZAHNRAD FÜR EINEN FAHRRADANTRIEB**
CHAIN WHEEL FOR A BICYCLE DRIVE
ROUE DENTEE POUR UN ENTRAINEMENT DE VELO

(30) Priorität: 02.03.2015 DE 102015203708
(43) Veröffentlichungstag der Anmeldung: 07.09.2016
(73) Patentinhaber: SRAM Deutschland GmbH, 97424 Schweinfurt (DE)
(72) Erfinder: Hölle, Philipp, 97424 Schweinfurt (DE); Reineke, Sebastian, 97422 Schweinfurt (DE); Vonend, Andreas, 97421 Schweinfurt (DE)

(56) Entgegenhaltungen:
- EP-A1- 0 431 573
- DE-U1-202004 019 270
- US-A1- 2005 090 349

## Beschreibung

Die vorliegende Erfindung betrifft ein Zahnrad für einen Fahrradantrieb, umfassend eine abschnittsweise plane erste Hauptfläche, eine der ersten Hauptfläche gegenüberliegende, abschnittsweise plane zweite Hauptfläche, die abschnittsweise parallel zu der ersten Hauptfläche verläuft, und eine Außenumfangsfläche, welche die erste und die zweite Hauptfläche miteinander verbindet, und an der eine Verzahnung vorgesehen ist.

Dabei umfasst die erste und die zweite Hauptfläche jeweils ein planes erstes Gebiet und ein gegenüber dem ersten Gebiet axial versetztes, planes zweites Gebiet, welches durch einen Übergangsabschnitt oder mehrere Übergangsabschnitte mit dem ersten Gebiet verbunden ist.

Das erste Gebiet der ersten Hauptfläche ist wenigstens abschnittsweise gegenüber dem ersten Gebiet der zweiten Hauptfläche angeordnet, und das zweite Gebiet der ersten Hauptfläche ist wenigstens abschnittsweise gegenüber dem zweiten Gebiet der zweiten Hauptfläche angeordnet.

Solche Zahnräder mit axial gegeneinander versetzten Gebieten sind beispielsweise aus der US 3477393 A bekannt, bei der axial versetzte Abschnitte als integrierte Abstandhalter zwischen benachbarten Kettenblättern am Vorderrad eines Fahrrads dienen.

In ähnlicher Weise ist aus der US 2012/0225745 A1 ein Zahnrad mit einem axialen Versatz bekannt, das als Ritzel mit integriertem Abstandhalter für ein Ritzelpaket an der Hinterrad-Nabe eines Fahrrads verwendet wird.

Dokument US2005/0090349 A1 offenbart die Präambel des Anspruchs 1. Weiterhin ist bekannt, axial gegeneinander versetzte Gebiete oder Abschnitte an einem Zahnrad vorzusehen, um dessen Stabilität oder Steifigkeit zu erhöhen.

Zahnräder sind Massenartikel. Daher ist es wünschenswert, diese auf einfache und zeitsparende Weise nach- und weiterbearbeiten zu können.

Vor dem Hintergrund dieses Standes der Technik besteht die Aufgabe der vorliegenden Erfindung darin, das gattungsgemäße Zahnrad so weiter zu entwickeln, dass es eine besonders einfache, zeitsparende und günstige Nach- und Weiterverarbeitung ermöglicht.

Hierzu ist erfindungsgemäß vorgesehen, dass das Zahnrad derart auf ein anderes Zahnrad der gleichen Gestalt stapelbar ist, dass das erste Gebiet der ersten Hauptfläche des Zahnrads flächig auf dem ersten Gebiet der zweiten Hauptfläche des anderen Zahnrads aufliegt, und dass das zweite Gebiet der ersten Hauptfläche des Zahnrads flächig auf dem zweiten Gebiet der zweiten Hauptfläche des anderen Zahnrads aufliegt.

Auf diese Weise können gleichartige Zahnräder übereinander gestapelt und auf diese Weise paketiert werden, was das Handling der so paketierten Zahnräder bei der Weiterverarbeitung erheblich erleichtert und insbesondere eine zeit- und raumsparende gemeinsame Wärmebehandlung der aufeinander gestapelten Zahnräder ermöglicht.

Dies ist besonders günstig für Zahnräder aus Stahl, insbesondere für solche mit geringer Zähnezahl (etwa ein einzelnes vorderes Kettenblatt), die aufgrund der im Betrieb großen angreifenden Kräfte in einem gesonderten Verfahren ausgehärtet werden müssen.

Dadurch, dass die gestapelten Zahnräder sowohl in dem ersten als auch in dem zweiten Gebiet flächig aufeinander aufliegen, kann auch eine gegenseitige Zentrierung und Positionierung der aufeinander gestapelten Zahnräder in einfacher Weise erreicht werden.

Üblicherweise befindet sich am radial äußeren Rand des ersten Gebiets die Verzahnung des Zahnrads. Daher ist häufig vorgesehen, dass sowohl für die erste als auch für die zweite Hauptfläche das zweite Gebiet, oder, sofern das zweite Gebiet aus mehreren, separaten Abschnitten zusammengesetzt ist, mindestens einer, vorzugsweise jeder dieser Abschnitte innerhalb von dem ersten Gebiet liegt.

Um zu vermeiden, dass aufgrund von Fertigungstoleranzen die Zahnräder nicht optimal aufeinander aufliegen, ist weiterhin besonders bevorzugt vorgesehen, dass das Zahnrad derart auf ein anderes Zahnrad der gleichen Gestalt stapelbar ist, dass zwischen den Übergangsabschnitten der ersten Hauptfläche des Zahnrads und den entsprechenden Übergangsabschnitten der zweiten Hauptfläche des anderen Zahnrads jeweils ein Spalt vorgesehen ist, vorzugsweise ein umlaufender Spalt.

Bevorzugt berühren die Übergangsabschnitte der ersten Hauptfläche des Zahnrads und der zweiten Hauptfläche des anderen Zahnrads sich nicht flächig, besonders bevorzugt berühren sie sich überhaupt nicht.

Hierbei hat sich als ausreichend herausgestellt, wenn die Breite des Spalts zwischen den unmittelbar benachbarten Übergangsabschnitten zweier aufeinander gestapelter Zahnräder nicht kleiner ist als das 2,5-fache der Toleranzbreite für die Dicke oder für die Kontur der Zahnräder, oder aber nicht kleiner ist als 0,2 mm.

Das zweite Gebiet der ersten und der zweiten Hauptfläche kann dabei jeweils ein einziger, zusammenhängender Abschnitt sein, es kann jedoch auch vorgesehen sein, dass das zweite Gebiet der ersten und der zweiten Hauptfläche jeweils aus einer Mehrzahl von separaten Abschnitten zusammengesetzt ist, die vorzugsweise regelmäßig über den Umfang des Zahnrads verteilt sind.

Alternativ kann vorgesehen sein, dass sowohl für die erste als auch die zweite Hauptfläche das zweite Gebiet radial, bevorzugt konzentrisch, innerhalb von dem ersten Gebiet angeordnet ist, so dass sich eine radiale Stufe ergibt.

Dass vorstehend Beschriebene lässt sich leicht auf drei oder mehr Gebiete verallgemeinern. Insbesondere ist gemäß einer bevorzugten Weiterbildung vorgesehen, dass sowohl die erste als auch die zweite Hauptfläche ein drittes Gebiet aufweist, das mit dem zweiten Gebiet der jeweiligen Hauptfläche durch einen weiteren Übergangsabschnitt oder weitere Übergangsabschnitte verbunden und gegenüber dem zweiten Gebiet axial versetzt ist, wobei das Zahnrad derart auf das andere Zahnrad der gleichen Gestalt stapelbar ist, dass das dritte Gebiet der ersten Hauptfläche des Zahnrads flächig auf dem dritten Gebiet der zweiten Hauptfläche des anderen Zahnrads aufliegt.

Vorzugsweise berühren sich auch dabei die weiteren Übergangsabschnitte der ersten Hauptfläche des Zahnrads und der zweiten Hauptfläche des anderen Zahnrads nicht flächig, bzw. ist ein Spalt zwischen diesen ausgebildet. Auch dieser Spalt hat vorzugsweise die vorstehend angegebene Mindestbreite.

Dabei kann insbesondere vorgesehen sein, dass sowohl für die erste als auch für die zweite Hauptfläche das dritte Gebiet radial, bevorzugt konzentrisch, innerhalb von dem zweiten Gebiet angeordnet ist.

Hierdurch kann eine Struktur mit mehreren radialen Stufen erzeugt werden, die insbesondere ermöglicht, einen besonders großen axialen Gesamt-Versatz zu erzielen, der sich aus Fertigungsgründen nicht in einer einzigen Stufe erzeugen lässt.

Bei der Herstellung von Ritzeln mit üblicher Dicke für einen Fahrrad-Antrieb ergibt sich beispielsweise experimentell eine Obergrenze von etwa 1,2 mm für einen axialen Versatz einer einzigen Stufe, denn die geometrischen Bedingungen, die für eine Stapelbarkeit erfüllt sein müssen, lassen sich für einen größeren axialen Versatz in einer einzigen Stufe nicht oder nur mit Schwierigkeiten bei der Herstellung realisieren. Soll ein größerer Gesamt-Versatz erzielt werden, kann dieser in der oben beschriebenen Art und Weise auf mehrere Stufen verteilt werden.

Insbesondere wenn das axial versetzte zweite Gebiet als integrierter Abstandhalter dienen soll, kann vorgesehen sein, dass das Zahnrad eine Befestigungsstruktur umfasst, die in einem planen Abschnitt der ersten und zweiten Hauptfläche vorgesehen ist, vorzugsweise in der Form von mehreren Befestigungslöchern oder Ausnehmungen für Schrauben, Stifte oder Nieten.

Insbesondere wenn das zweite oder dritte Gebiet oder aus mehreren separaten Abschnitten zusammengesetzt ist, kann vorgesehen sein, dass diese separaten Abschnitte des zweiten oder dritten Gebiets und die zugehörigen Übergangsabschnitte für die erste und die zweite Hauptfläche so ausgebildet sind, dass jeweils topfartige, in einer Draufsicht vorzugsweise kreisförmige Vertiefungen oder Erhebungen gebildet sind, in denen vorzugsweise jeweils eine Befestigungsöffnung als Befestigungsstruktur vorgesehen ist.

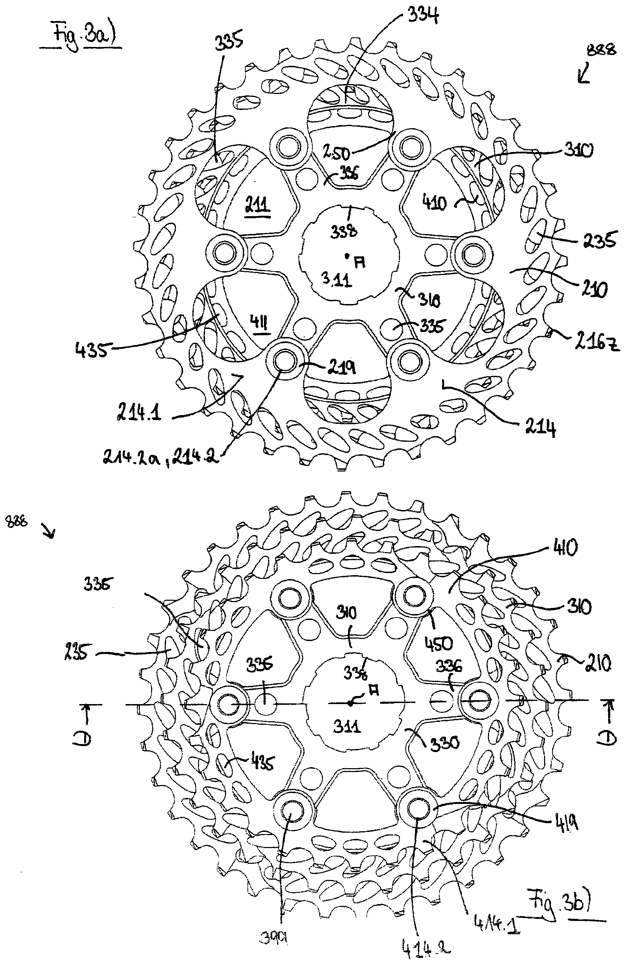

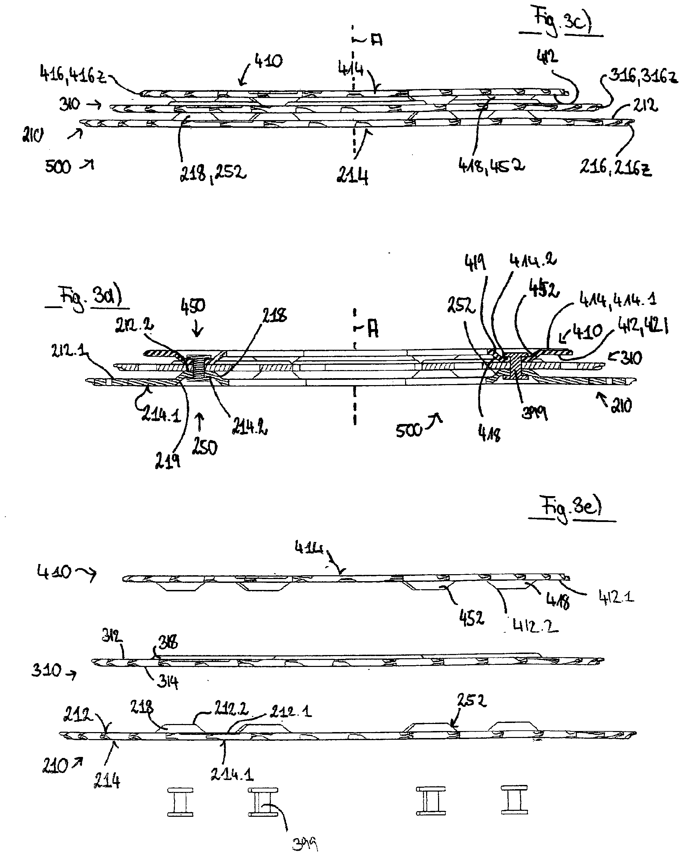

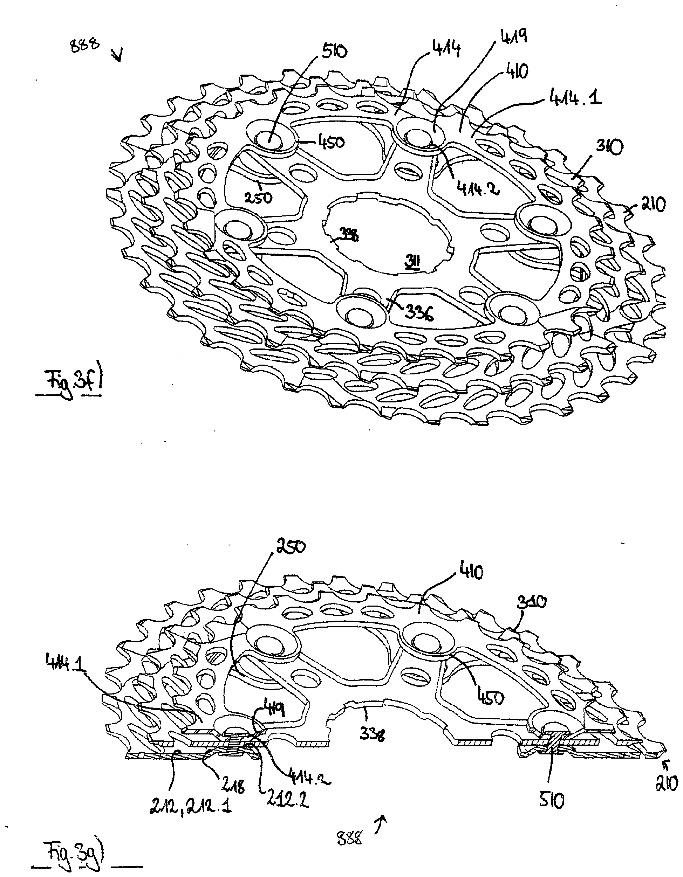

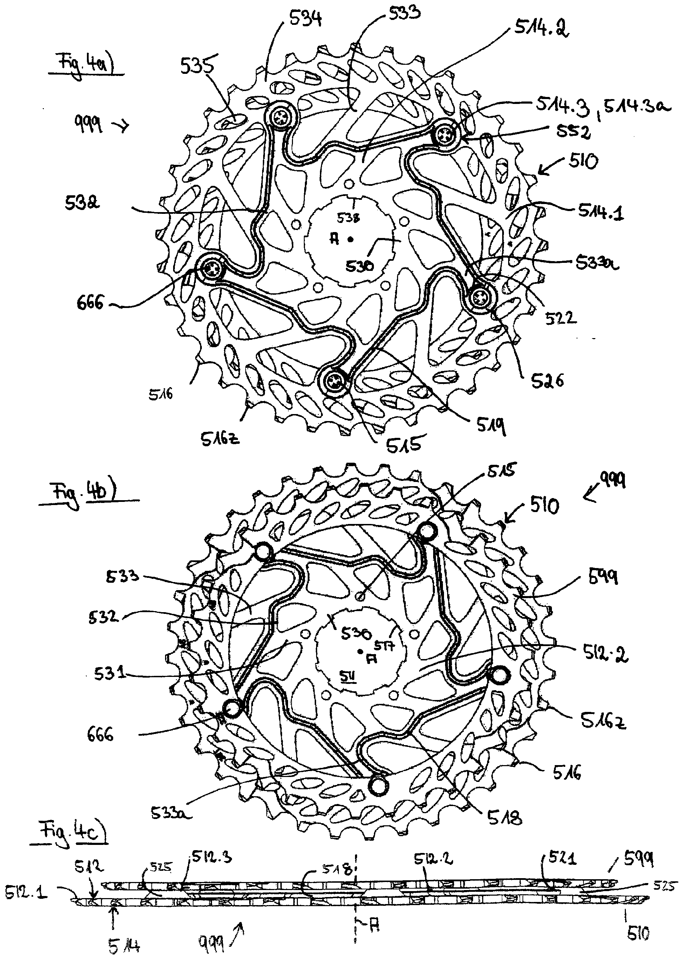

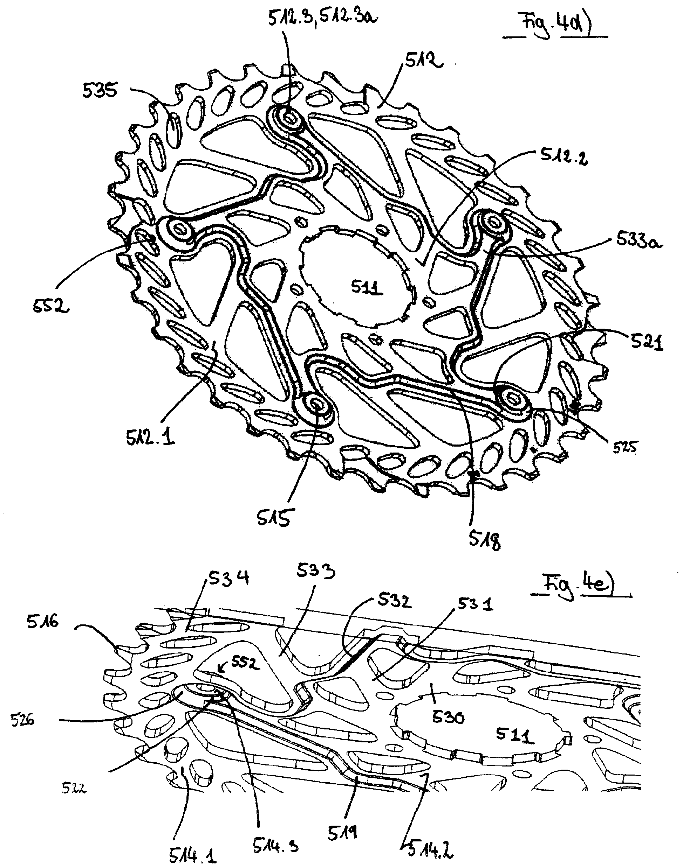

Diese insbesondere als Abstandhalter zwischen benachbarten Zahnrädern dienenden topfartigen Vertiefungen oder Erhebungen können vorzugsweise mit wenigstens einem weiteren gegenüber dem ersten Gebiet axial versetzten Gebiet kombiniert sein, etwa mit gegenüber dem ersten Gebiet axial versetzten Innenbereichen von Verbindungsarmen, wie nachfolgend etwa am Beispiel von Figur 4 erläutert wird, aber auch mit zur Erhöhung der Steifigkeit gegenüber dem ersten Gebiet axial versetzten Randbereichen von Verbindungsarmen, wie sie in Figur 3 für das Zahnrad 310 angedeutet sind. Dabei liegen auch hierbei die verschiedenen planen Gebiete der ersten Hauptfläche des Zahnrads flächig auf den entsprechenden planen Gebieten der zweiten Hauptfläche des anderen Zahnrads auf.

Weiterhin wird Patentschutz beantragt für eine Mehrfach-Ritzelanordnung für einen Fahrradantrieb, umfassend mehrere, drehfest aneinander montierte Zahnräder, wobei wenigstens eines, vorzugsweise jedes der Zahnräder ein erfindungsgemäßes Zahnrad ist, wie es zuvor beschrieben wurde.

Als besonders bevorzugtes Ausführungsbeispiel kann vorgesehen sein, dass eine solche Mehrfach-Ritzelanordnung aus drei Zahnrädern gebildet ist, wobei die beiden äußeren Zahnräder topfartige, in einer Draufsicht vorzugsweise kreisförmige Vertiefungen oder Erhebungen aufweisen, die als Abstandhalter zwischen den äußeren Zahnrädern und dem mittleren Zahnrad fungieren. Auch das mittlere Zahnrad kann einen axialen Versatz aufweisen, der beispielsweise zur Stabilisierung der Struktur oder zur Erhöhung der Steifigkeit dient, es kann sich jedoch auch um ein konventionelles Zahnrad ohne axialen Versatz handeln.

Schließlich wird auf Schutz beantragt ein Verfahren zur Wärmebehandlung von Zahnrädern, welches die folgenden Schritte umfasst: Stapeln mehrerer gleichartiger erfindungsgemäßer Zahnräder aufeinander und Wärmebehandlung der Zahnräder im gestapelten Zustand.

Dabei werden die Zahnräder so aufeinander gestapelt, dass für jedes Zahnrad, welches auf ein anderes Zahnrad gestapelt ist, die verschiedenen planen Gebiete der ersten Hauptfläche des Zahnrads auf den entsprechenden planen Gebieten der zweiten Hauptfläche des anderen Zahnrads flächig aufliegen. Gewünschtenfalls kann auch eine axiale Kraft auf die gestapelten Zahnräder wenigstens bei der Wärmebehandlung ausgeübt werden.

Der Vollständigkeit halber wird darauf hingewiesen, dass in dem Fall, dass der axiale Versatz der Zahnräder zu groß ist oder aus anderen Gründen keine Stapelbarkeit erreicht werden kann, eine gemeinsame Wärmebehandlung mehrerer gleichartiger Zahnräder auch durchgeführt werden kann, indem zwischen die erste Hauptfläche des jeweiligen oberen Zahnrads und die zweite Hauptfläche des jeweiligen unteren Zahnrads jeweils eine Einlage, vorzugsweise eine ringförmige Einlage, gelegt wird. Diese Einlagen können immer wieder verwendet werden.

Nachfolgend wird die vorliegende Erfindung anhand von vier bevorzugten Ausführungsbeispielen beschrieben, die in den beiliegenden Figuren dargestellt sind.

Um die Figuren nicht zu überfrachten sind in den verschiedenen Ansichten nicht immer alle Bestandteile mit Bezugszeichen gekennzeichnet, insbesondere wenn mehrere gleichartige Bestandteile in einer Figur vorhanden sind.

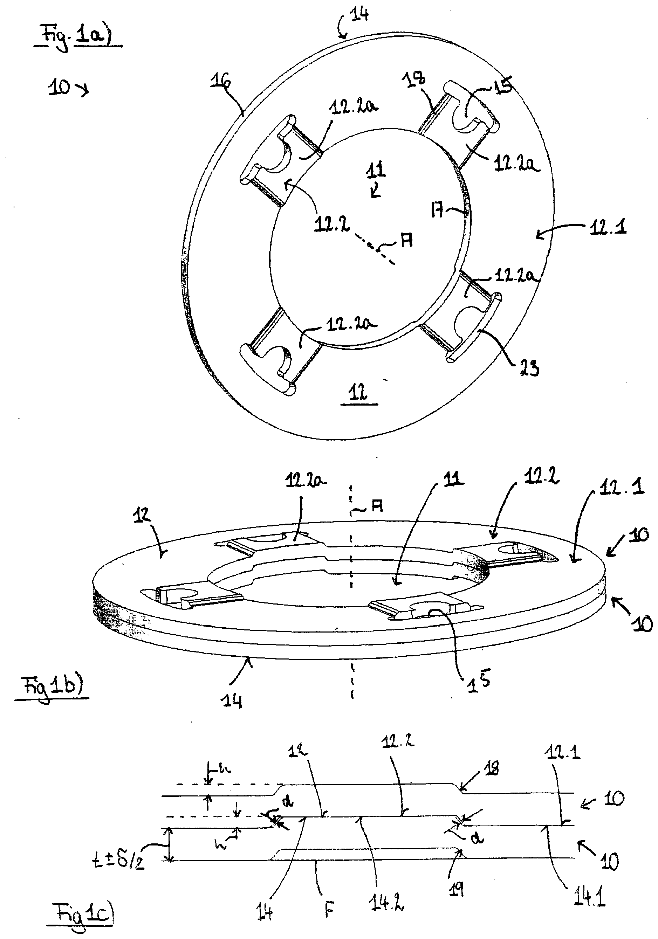

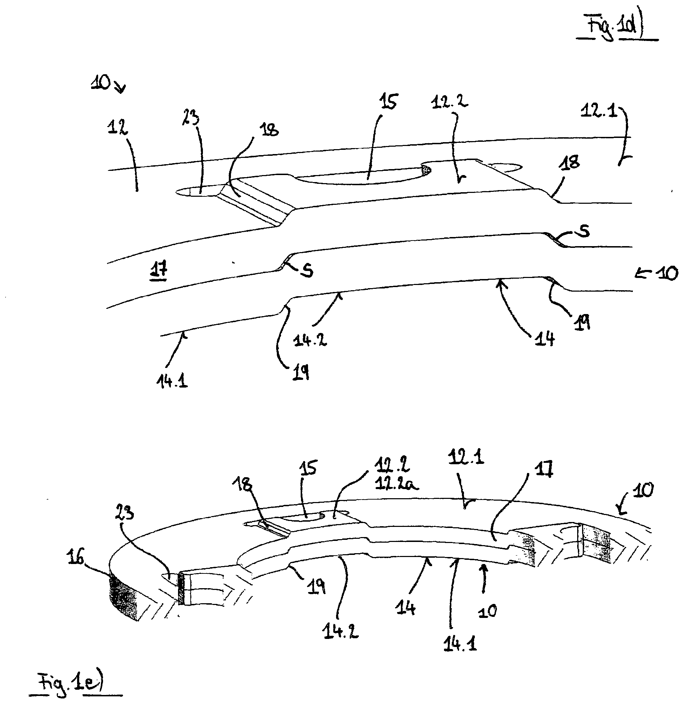

Dabei zeigt Figur 1 in den Teilabbildungen 1a) bis 1e) in verschiedenen Ansichten ein erstes Ausführungsbeispiel eines erfindungsgemäßen Zahnrads in vereinfachter Darstellung, welches als Einfach-Kettenblatt für ein Fahrrad verwendet werden kann,

Figur 2 zeigt in den Teilabbildungen 2a) bis 2e) verschiedene Ansichten eines zweiten Ausführungsbeispiels eines erfindungsgemäßen Zahnrads, welches als Abschlussritzel in einem Ritzelpaket einer Hinterrad-Nabe eines Fahrrads eingesetzt werden kann,

Figur 3 zeigt in den Teilabbildungen 3a) bis 3g) verschiedene Ansichten einer Mehrfach-Ritzelanordnung mit zwei oder drei erfindungsgemäßen Zahnrädern und

Figur 4 zeigt in den Teilabbildungen 4a) bis 4e) verschiedene Ansichten einer Mehrfach-Ritzelanordnung mit einem erfindungsgemäßen Zahnrad und einem konventionellen Zahnrad.

Teilabbildung 1a) zeigt eine perspektivische Darstellung eines erfindungsgemäßen Zahnrads 10 mit einer zentralen Öffnung 11 gemäß einem ersten Ausführungsbeispiel der Erfindung und ermöglicht einen Blick auf die zweite Hauptfläche 12 des Zahnrads 10, während die der zweiten Hauptfläche 12 gegenüberliegende erste Hauptfläche 14 dem Betrachter weitgehend abgewandt ist.

In allen Teilabbildungen von Figur 1 ist die Darstellung insofern vereinfacht, als die Verzahnung an der Außenumfangsfläche 16, welche die erste und die zweite Hauptfläche 14, 12 miteinander verbindet, nicht dargestellt ist.

Beide Hauptflächen 12, 14 sind abschnittsweise plan, abschnittsweise parallel zueinander und umfassen jeweils ein erstes Gebiet 12.1, 14.1 und ein zweites Gebiet, 12.2, 14.2, die axial (bezogen auf die Rotationsachse A des Zahnrads 10) gegeneinander versetzt sind, und zwar in die gleiche Richtung und mit dem gleichen Versetzungsbetrag h (vgl. Fig. 1c)).

Im vorliegenden Beispiel macht das erste Gebiet 12.1 bzw. 14.1 jeweils einen Großteil der zweiten Hauptfläche 12 bzw. der ersten Hauptfläche 14 aus. Das zweite Gebiet 12.2 bzw. 14.2 ist jeweils aus vier einzelnen Abschnitten 12.2a, 14.2a zusammengesetzt, welche gleichmäßig um den Umfang des Zahnrads 10 an dessen radial innerem Rand 17 verteilt sind und jeweils die Grundform eines Kreisring-Segments aufweisen, wobei an den radial äußeren Rändern der Abschnitte 12.2a, 14.2a jeweils eine halbkreisförmige Ausnehmung als Befestigungsstruktur 15 für eine (hier nicht dargestellte) Schraube vorgesehen ist. Vom radial äußeren Bereich des ersten Gebiets 12.1 bzw. 14.1 sind die kreisringsegment-förmigen Abschnitte 12,2a, 14,2a jeweils durch einen im Wesentlichen in Umfangsrichtung verlaufenden Schlitz 23 getrennt,

Die einzelnen Abschnitte 12.2a bzw. 14.2a des zweiten Gebiets 12.2 bzw. 14.2 sind jeweils gegenüber dem ersten Gebiet 12.1 bzw. 14.1 um einen Versetzungsbetrag h (vgl. Fig. 1c)) axial versetzt und durch schräg verlaufende Übergangsabschnitte 18 bzw. 19 mit dem ersten Gebiet 12.1 bzw. 14.1 verbunden.

Teilabbildung 1b) stellt zwei auf aufeinander gestapelte erfindungsgemäße Zahnräder 10 dar. Die Zahnräder 10 sind erfindungsgemäß so geformt, dass jeweils mehrere gleichartige Zahnräder 10 derart aufeinander gestapelt werden können, dass die erste Hauptfläche 14 des oberen Zahnrads 10 flächig auf der zweiten Hauptfläche 12 des unteren Zahnrads 10 aufliegt. Genauer liegt erfindungsgemäß das erste Gebiet 14.1 der ersten Hauptfläche 14 des oberen Zahnrads 10 flächig auf dem ersten Gebiet 12.1 der zweiten Hauptfläche 12 des unteren Zahnrads 10 auf, und das zweite Gebiet 14.2 der ersten Hauptfläche 14 des oberen Zahnrads 10 liegt flächig auf dem zweiten Gebiet 12 der zweiten Hauptfläche 12 des unteren Zahnrads 10 auf.

In anderen Worten sind der axiale Versatz und die entsprechenden Übergänge so gestaltet, dass die resultierende Erhebung auf der Oberseite des Zahnrads genau in die entsprechende Vertiefung auf der Unterseite des Zahnrads hinein passt.

Aufgrund der übereinander platzierten axial versetzten Abschnitte 12.2a, 14.2a ist der resultierende Zahnrad-Stapel besonders stabil und selbstzentriert. Auf diese Weise können mehrere Zahnräder im gestapelten Zustand gemeinsam einfach gehandhabt und insbesondere gemeinsam einer Wärmebehandlung unterzogen werden.

Teilabbildung 1c) stellt eine vergrößerte Ansicht der aufeinander auf einem Boden F gestapelten Strukturen aus Teilabbildung 1b) dar, betrachtet in radialer Richtung von der zentralen Öffnung 11 aus, und zeigt insbesondere, dass sich die Übergangsabschnitte 18, 19 der aufeinander gestapelten Zahnräder 10 vorzugsweise nicht oder zumindest nicht flächig berühren. Dies wird auch in den perspektivischen Darstellungen der Teilabbildungen 1e) und 1f) deutlich. Auf diese Weise wird gewährleistet, dass die planen Gebiete 12.1, 12.2, 14.1, 14.2 der beiden Hauptflächen 12, 14 auch unter Berücksichtigung der Fertigungstoleranzen insbesondere für die Übergangsabschnitte 18, 19 sicher aufeinander aufliegen können.

Insbesondere kann die Breite d des Spalts zwischen den übereinander angeordneten Übergangsabschnitten 18, 19 zweier aufeinander gestapelter gleichartiger Zahnräder die Beziehung 2,5δ ≤ d erfüllen, wobei δ die Toleranzbreite für die Dicke t des Zahnrads 10 oder für dessen Kontur ist. Vorzugsweise ist die Breite d des Spalts nicht kleiner als 0,2 mm.

Sofern die Breite des Spalts nicht im Wesentlichen konstant ist, kann unter der Breite d des Spalts die mittlere Breite oder auch die maximale Breite des Spalts gemeint sein.

Das Zahnrad 10 kann mit vier in den Ausnehmungen 15 aufgenommenen Befestigungsschrauben an einer Kurbel montiert werden. Durch geeignete Auswahl des axialen Versatzes h zwischen den ersten und zweiten Gebieten der ersten und zweiten Hauptfläche wird hierdurch ermöglicht, ein einzelnes Kettenrad an einer Kurbel zu montieren, die für zwei Kettenräder konstruiert wurde, wobei dennoch die axiale Position der Verzahnung entsprechend der gewünschten Kettenlinie erreicht wird.

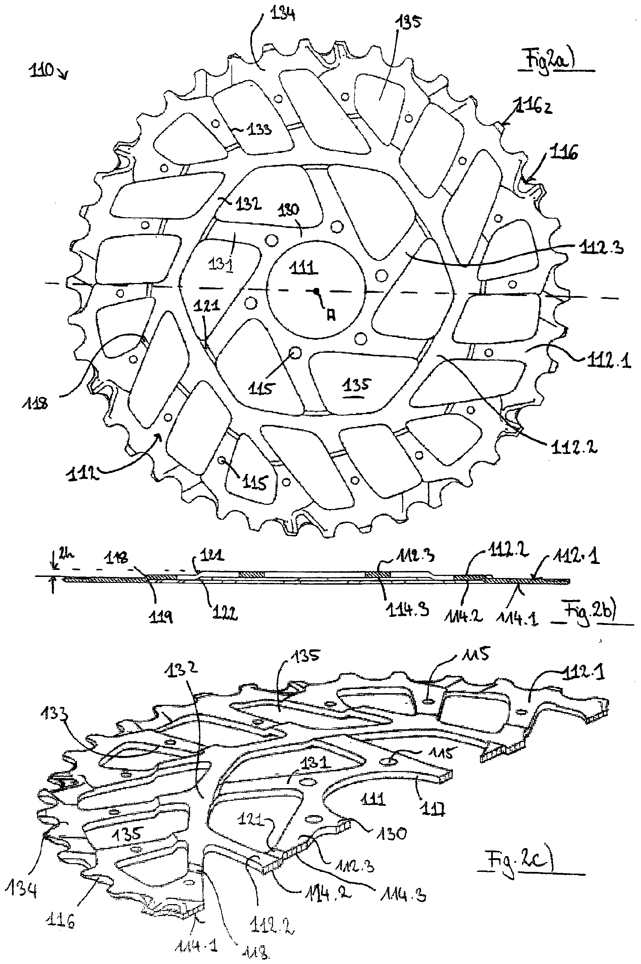

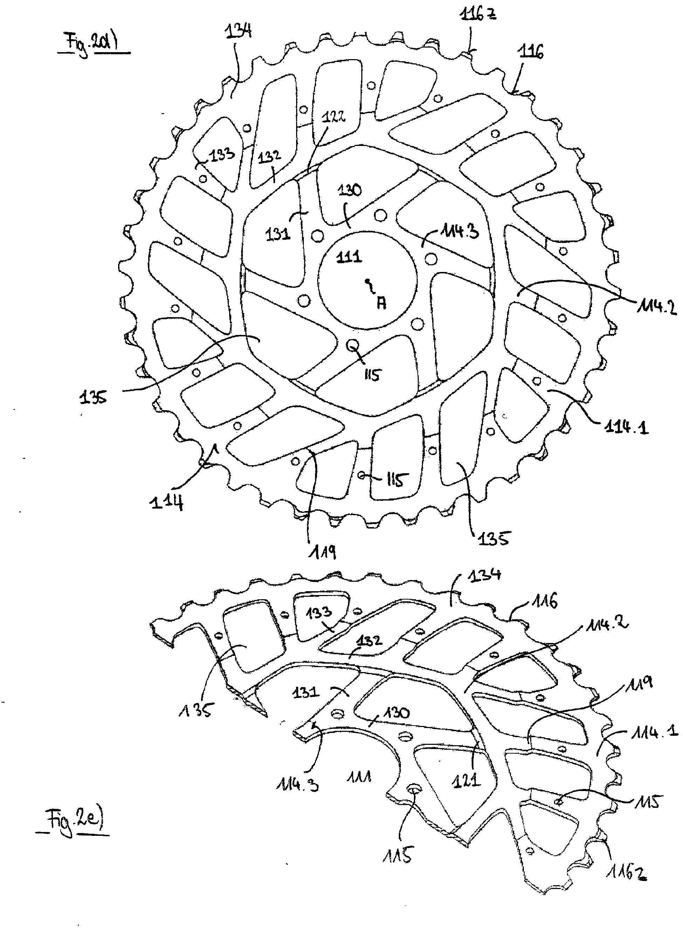

Figur 2 zeigt in den Teilabbildungen 2a) bis 2d) verschiedene Ansichten eines Zahnrads 110 gemäß einem zweiten Ausführungsbeispiel der vorliegenden Erfindung.

Bestandteile und Merkmale des zweiten Ausführungsbeispiels, die solchen des ersten Ausführungsbeispiels entsprechen, werden mit Bezugszeichen gekennzeichnet, die aus denjenigen des ersten Ausführungsbeispiels durch Addition der Zahl 100 hervorgehen. Bei Verwendung von Buchstaben als Bezugszeichen werden die gleichen Bezugszeichen für alle Ausführungsbeispiele eingesetzt. Das zweite Ausführungsbeispiel wird nur insofern im Detail beschrieben, als es sich vom ersten Ausführungsbeispiel unterscheidet, auf dessen vorstehende Beschreibung ansonsten verwiesen wird.

Teilabbildung 2a) zeigt eine Draufsicht auf die zweite Hauptfläche 112 des Zahnrads 110. Dabei ist hier (im Gegensatz zur Figur 1) auch die an der Außenumfangsfläche 116 vorgesehene Verzahnung 116z dargestellt. Teilabbildung 2d) zeigt eine Draufsicht auf die erste Hauptfläche 114.

Im Gegensatz zum ersten Ausführungsbeispiel umfasst die erste Hauptfläche 114 bzw. die zweite Hauptfläche 112 des Zahnrads 110 drei axial zueinander versetzte, konzentrisch angeordnete Gebiete 114.1, 114.2 und 114.3 bzw. 112.1, 112.2 und 112.3, die eine mehrstufige Struktur bilden, wie insbesondere aus der Schnittdarstellung in Teilabbildung 2b) und den perspektivischen Teilansichten der Teilabbildungen 2c) und 2e) hervorgeht.

Die Gebiete sind durch schräg verlaufende Übergangsabschnitte 118, 121, 119, 122 miteinander verbunden, die so ausgestaltet sind, dass gleichartige Zahnräder in der erfindungsgemäßen Art und Weise aufeinander gestapelt werden können.

In der Draufsicht umfasst das Zahnrad 110 einen inneren Ring 130, einen mittleren Ring 132 und einen äußeren Ring 134, an welchem die Verzahnung 116z vorgesehen ist. Der innere Ring 130 und der mittlere Ring 132 sind durch eine Mehrzahl von inneren Verbindungsarmen 131 miteinander verbunden, während der mittlere Ring 132 und der äußere Ring 134 durch eine Mehrzahl von äußeren Verbindungsarmen 133 miteinander verbunden sind. Zwischen den Verbindungsarmen und den Ringen befinden sich gewichtsreduzierende Öffnungen 135, die in zwei konzentrischen Kreisen angeordnet sind.

Die Übergangsabschnitte 118, 119 zwischen dem ersten Gebiet 112.1, 114.1 und dem zweiten Gebiet 112.2, 114.2 befinden sich im vorliegenden Ausführungsbeispiel auf den äußeren Verbindungsarmen 133, die Übergangsabschnitte 121, 122 zwischen dem zweiten Gebiet 112.2, 114.2 und dem dritten Gebiet 112.3, 114.3 befinden sich an der Grenze zwischen den inneren Verbindungsarmen 131 und dem mittleren Ring 132.

Abgesehen von der mehrstufigen Struktur ähnelt die Gestalt des Zahnrads 110 derjenigen des Abschlussritzels 16, das in Figur 7 der EP 2319752 A2 dargestellt ist, und auf dessen Beschreibung insbesondere in den Absätzen [0035] bis [0037] der EP 2319752 A2 ergänzend verwiesen wird.

Sowohl in den ersten Gebieten 112.1 114.1 als auch in den dritten Gebieten 112.3 bzw. 114.3 der zweiten und ersten Hauptfläche sind jeweils eine Mehrzahl von Befestigungsöffnungen 115 vorgesehen. Diese können beispielsweise dazu eingesetzt werden, das dargestellte Zahnrad 110 über hier nicht dargestellte Stifte mit weiteren Zahnrädern oder anderen Bauteilen einer Ritzelanordnung zu verbinden, wie es ebenfalls in der EP 2319752 A2 näher beschrieben ist.

Über die in Figur 2 dargestellte, mehrfach abgestufte Struktur kann ein besonders großer axialer Gesamt-Versatz 2h (bei n Stufen gleicher Höhe n·h) erzielt werden. Dies ist besonders zweckmäßig für ein Abschlussritzel eines Ritzelpakets, damit dieses möglichst nah an den Speichen des Laufrads bzw. möglichst weit in Richtung der Mittelebene des Fahrrads positioniert werden kann, um für die übrigen Ritzel mehr Bauraum bereitstellen und so eine größere Anzahl von Ritzeln unterbringen zu können.

Figur 3 zeigt in den Teilabbildungen 3a) bis 3g) eine Mehrfach-Ritzelanordnung aus drei erfindungsgemäßen Zahnrädern (Ritzeln) 210, 310 und 410 verschiedener Größe. Die resultierende Mehrfach-Ritzelanordnung erhält das Bezugszeichen 888. Figur 4 zeigt in den Teilabbildungen 4a) bis 4c) eine weitere Mehrfach-Ritzelanordnung 999 mit einem konventionellen Zahnrad 599 und einem erfindungsgemäßen Zahnrad 510, welches in den Teilabbildungen 4d) und 4e) nochmals gesondert dargestellt ist.

Merkmale und Bestandteile der Zahnräder 210, 310, 410 und 510 (vgl. Fig. 4), die solchen des Zahnrads 10 aus Figur 1 entsprechen, werden mit Bezugszeichen gekennzeichnet, die durch Addition der Zahl 200, 300 400 bzw. 500 aus denen der Figur 1 hervorgehen. Wiederum werden in erster Linie Unterschiede zu den ersten beiden Ausführungsbeispielen beschrieben, auf deren vorstehende Beschreibung ansonsten verwiesen wird.

Teilabbildung 3a) zeigt eine Draufsicht auf die Ritzelanordnung 888, bei der das größte Ritzel 210 oben liegt, Teilabbildung 3b) zeigt eine Draufsicht auf die Ritzelanordnung 888, bei das kleinste Ritzel 410 oben liegt.

Teildabbildung 3d) zeigt eine Seitenansicht, Teilabbildung 3d) eine Schnittdarstellung entlang der Linie D-D in Teilabbildung 3b), und Teildabbildung 3e) zeigt eine Explosionsdarstellung der Mehrfach-Ritzelanordnung 500.

Teilabbildungen 3f) und 3g) zeigen schließlich eine perspektivische Ansicht der Mehrfach-Ritzelanordnung 500, einmal ganz (3f)) und einmal in einer Ansicht (3g)), bei der die Ritzelanordnung 888 längs eine Ebene halbiert wurde, die die Rotationsachse A der Ritzelanordnung 888 enthält.

Bei der in Figur 3 dargestellten Mehrfach-Ritzelanordnung 888 sind das kleinste Ritzel 410 und das größte Ritzel 210 jeweils im wesentlichen kreisringförmig und weisen radial nach innen vorstehend Befestigungsaugen 450 bzw. 250 auf, die gleichmäßig über den Umfang des jeweiligen Ritzels verteilt sind. Da die Ritzel 210 und 410 in der Grundgestalt einander entsprechen, wird im Folgenden nur das größte Ritzel 210 beschrieben.

Ähnlich wie beim ersten Ausführungsbeispiel ist auch beim Ritzel 210 das zweite Gebiet 212.2, 214.2 der zweiten und ersten Hauptfläche 212, 214 jeweils aus einer Mehrzahl von separaten Abschnitten 212.2a, 214.2a zusammengesetzt, die im Gegensatz zum ersten Ausführungsbeispiel hier jedoch in der Draufsicht im Wesentlichen kreisförmig sind und sich im Bereich der Befestigungsaugen 250 befinden, so dass die separaten Abschnitte 212.2a, 214.2a und die zugehörigen Übergangsabschnitte 218, 219 jeweils topfartige Vertiefungen oder Erhebungen 252 bilden, in denen jeweils eine Befestigungsöffnung 215 als Befestigungsstruktur vorgesehen ist.

Diese Vertiefungen bzw. Erhebungen werden als integrierte Abstandhalter verwendet, wenn die Ritzel 210 und 410 durch die Nieten 399 an dem mittleren Ritzel 310 befestigt werden.

Das mittlere Ritzel 310 weist einen inneren Ring 330 und einen äußeren Ring 334 auf, die über radiale Verbindungsarme 336 miteinander verbunden sind. Am Innenumfang des inneren Rings können Mitnehmer-Elemente 338 vorgesehen sein, die dazu bestimmt sind, in einen (nicht dargestellten) Antreiber einzugreifen, um Drehmoment von dem Ritzel 310 auf den Antreiber und über diesen auf das Hinterrad eines Fahrrads zu übertragen.

Am radial äußeren Ende jedes Verbindungsarms 336 ist eine Befestigungsöffnung 315 vorgesehen. Diese dient dazu, die Ritzel 210 und 410 gemeinsam durch jeweils einen Niet 399 an dem mittleren Ritzel 310 zu befestigen.

Das mittlere Ritzel 310 kann ohne axialen Versatz ausgebildet sein, es kann sich jedoch auch beim mittleren Ritzel 310 um ein erfindungsgemäßes, stapelbares Zahnrad mit axialem Versatz handeln, bei dem beispielsweise die äußeren Ränder der Verbindungsarme 336 und der innere Rand des an die Verbindungsarme 336 anschließenden äußeren Rings 334 gegenüber dem Innenbereich der Verbindungsarme 336 und dem Außenbereich des äußeren Rings 334 in erfindungsgemäßer Weise axial versetzt sein könnten, um die Stabilität des mittleren Ritzels 310 zu erhöhen.

Fig. 4 zeigt ein weiteres Beispiel einer Mehrfach-Ritzelanordnung 999 mit einem erfindungsgemäßen Zahnrad 510 und einem konventionellen Zahnrad 599, welches vorliegend das kleinere der beiden Zahnräder bildet.

In der Draufsicht in Teilabbildungen 4a) und 4b) ähnelt das Zahnrad 510 dem Zahnrad 110 aus Figur 2, mit einem inneren Ring 530, der über innere Verbindungsarme 531 mit einem mittleren Ring 532 verbunden ist, welcher wiederum über äußere Verbindungsarme 533 mit einem äußeren Ring 534 verbunden ist, an dessen äußerem Rand die Verzahnung 516 vorgesehen ist.

Ähnlich wie bei dem Zahnrad 110 umfasst auch bei dem Zahnrad 510 sowohl die erste Hauptfläche 514 als auch die zweite Hauptfläche 512 jeweils ein erstes Gebiet 514.1, 512.1 und ein zweites Gebiet 514.2, 512.2, das vollständig innerhalb von dem ersten Gebiet 514.1, 512.1 angeordnet ist.

Im Unterschied zum Zahnrad 110 erstreckt sich bei dem Zahnrad 510 jedoch das zweite Gebiet 514.2, 512.2 nicht nur über den inneren Ring 530 und die inneren Verbindungsarme 531 sondern auch über den inneren Bereich des mittleren Rings 532 und in vier "Ausläufern" 533a bis in jeden zweiten äußeren Verbindungsarm 533 hinein.

Am radial äußeren Ende jedes zweiten Verbindungsarms 533 ist das zweite Gebiet 514.2, 512.2 über einen weiteren Verbindungsabschnitt 522, 521 mit jeweils einem kreisförmigen Abschnitt 514.3a, 512.3a von einem dritten Gebiet 514.3, 512.3 verbunden, das axial gegenüber dem zweiten Gebiet 514.2, 512.2 versetzt ist. Über zusätzliche Übergangsabschnitte 526, 525 sind die einzelnen Abschnitte 514.3a, 512.3a des dritten Gebiets 514.3, 512.3 jeweils direkt mit dem ersten Gebiet 514.1, 512.1 im Bereich des äußeren Rings 534 verbunden.

In den einzelnen Abschnitten 514.3a, 512.3a des dritten Gebiets 514.3, 512.3 sind jeweils Durchgangsöffnungen als Befestigungsstrukturen 515 vorgesehen, in denen Schrauben 666 aufgenommen sind, die das Zahnrad 510 mit dem konventionellen Zahnrad 599 drehfest verbinden.

Der axiale Abstand zwischen den beiden Zahnrädern 510 und 599 ist dabei durch die Summe aus dem axialen Versatz zwischen dem ersten und dem zweiten Gebiet und dem axialen Versatz zwischen dem zweiten und dritten Gebiet jeweils der ersten oder der zweiten Hauptfläche des Zahnrads 510 gegeben.

Das Zahnrad 510 kombiniert also den in Figur 2 gezeigten, gegenüber dem Außenbereich des Zahnrads axial versetzten Innenbereich mit den in Figur 3 gezeigten "topfartigen" Distanzhaltern.

Es sind jedoch auch viele weitere Kombinationen verschiedener, axial gegeneinander versetzter, planer Gebiete möglich, solange zwei gleichartige Zahnräder so aufeinander stapelbar sind, dass jedes Gebiete der ersten Hauptfläche des oberen Zahnrads auf dem entsprechenden Gebiet der zweiten Hauptfläche des unteren Zahnrads flächig aufliegt.

Die Herstellung solcher Zahnräder ist beispielsweise dadurch möglich, dass zunächst aus einem plattenförmigen Material Vorformlinge ausgestanzt und diese dann unter Druck, ggf. in geeignet ausgebildeten Werkzeugen, zu den erfindungsgemäßen Zahnrädern umgeformt werden, um die axial gegeneinander versetzten Gebiete zu erzeugen.

### Bezugszeichen

Zahnrad bzw. Ritzel 10; 110; 210; 310; 410; 510
zentrale Öffnung 11; 111; 211; 311; 411; 511
zweite Hauptfläche 12; 112; 212; 312; 412; 512
erste Hauptfläche 14; 114; 214; 314; 414; 514
Außenumfangsfläche 16; 116; 216; 316; 416; 516
Verzahnung 116z; 216z; 316z; 416z; 516z
erstes Gebiet der ersten Hauptfläche 14.1; 114.1; 214.1; 314.1; 414.1; 514.1
erstes Gebiet der zweiten Hauptfläche 12.1; 112.1; 212.1; 312.1; 412.1; 512.1
zweites Gebiet der ersten Hauptfläche 14.2; 114.2; 214.2; 314.2; 414.2; 514.2
zweites Gebiet der zweiten Hauptfläche 12.2; 112.2; 212.2; 312.2; 412.2; 512.2
separate Abschnitte des zweiten Gebiets 12.2a, 14.2a; 212.2a, 214.2a; 412.2a, 414.2a
radial innerer Rand 17; 117; 217; 317; 417; 517
Befestigungsstruktur, Befestigungsöffnung, Ausnehmung 15; 115; 215; 315; 415; 515
Übergangsabschnitt zwischen zweitem und erstem Gebiet der zweiten Hauptfläche 18; 118; 218; 318; 418; 518
Übergangsabschnitt zwischen zweitem und erstem Gebiet der ersten Hauptfläche 19; 119; 219; 319; 419; 519
Übergangsabschnitt zwischen drittem und zweitem Gebiet der zweiten Hauptfläche 121; 521
Übergangsabschnitt zwischen drittem und zweitem Gebiet der ersten Hauptfläche 122; 522
Übergangsabschnitt zwischen erstem und drittem Gebiet der zweiten Hauptfläche 525
Übergangsabschnitt zwischen erstem und drittem Gebiet der ersten Hauptfläche 526
Schlitz 23
Versetzungsbetrag h
Breite des Spalts zwischen den übereinander angeordneten Übergangsabschnitten zweier aufeinander gestapelter gleichartiger Zahnräder d
Dicke des Zahnrads t
Fertigungstoleranz δ
innerer Ring 130; 330; 530
mittlerer Ring 132; 532
äußerer Ring 134; 334; 534
innerer Verbindungsarm 131; 531
äußerer Verbindungsarm 133; 533
gewichtsreduzierende Öffnung 135; 235; 335; 435; 535
Befestigungsauge 250; 450
Niet 399
Schraube 666
topfartige Vertiefung/Erhebung 252; 452; 552
Mehrfach-Ritzelanordnung 888; 999

## Patentansprüche

1. Zahnrad (10; 110; 210; 310; 410; 510) für einen Fahrrad-Antrieb, umfassend
eine abschnittsweise plane erste Hauptfläche (14; 114; 214; 314; 414; 514) eine der ersten Hauptfläche (14; 114; 214; 314; 414; 514) gegenüberliegende, abschnittsweise plane zweite Hauptfläche (12; 112; 212; 312; 412; 512), die wenigstens abschnittsweise parallel zu der ersten Hauptfläche (14; 114; 214; 314; 414; 514) verläuft, und eine Außenumfangsfläche (16; 116; 216; 316; 416; 516), welche die erste (14; 114; 214; 314; 414; 514) und die zweite (12; 112; 212; 312; 412; 512) Hauptfläche miteinander verbindet und an der eine Verzahnung (116z; 216z; 316z; 416z; 516t) vorgesehen ist,
wobei die erste (14; 114; 214; 314; 414; 514) und die zweite Hauptfläche (12; 112; 212; 312; 412; 512) jeweils ein planes erstes Gebiet (14.1, 12.1; 114.1,112.1; 214.1, 212.1; 314.1, 312.1; 414.1, 412.1; 514.1, 512.1) und ein gegenüber dem ersten Gebiet axial versetztes planes zweites Gebiet (14.2, 12.2; 114.2, 112.2; 214.2, 212.2; 314.2, 312.2; 414.2, 412.2; 514.2, 512.2) umfasst, welches durch einen oder mehrere Übergangsabschnitte (18, 19; 118, 119; 218, 219; 318, 319; 418, 419; 518, 519) mit dem ersten Gebiet (14.1, 12.1; 114.1,112.1; 214.1, 212.1; 314.1, 312.1; 414.1, 412.1; 514.1, 512.1) verbunden ist,
wobei das erste Gebiet (14.1; 114.1; 214.1; 314.1; 414.1; 514.1) der ersten Hauptfläche (14; 114; 214; 314; 414; 514) wenigstens abschnittsweise gegenüber dem ersten Gebiet (12.1; 112.1; 212.1; 312.1; 412.1; 512.1) der zweiten Hauptfläche (12; 112; 212; 312; 412; 512) angeordnet ist, und das zweite Gebiet (14.2; 114.2; 214.2; 314.2; 414.2; 514.2) der ersten Hauptfläche (14; 114; 214; 314; 414; 514) wenigstens abschnittsweise gegenüber dem zweiten Gebiet (12.2; 112.2; 212.2; 312.2; 412.2; 512.2) der zweiten Hauptfläche (12; 112; 212; 312; 412; 512) angeordnet ist
**dadurch gekennzeichnet, dass** das Zahnrad (10; 110; 210; 310; 410; 510) derart auf ein anderes Zahnrad (10; 110; 210; 310; 410; 510) der gleichen Gestalt stapelbar ist, dass das erste Gebiet (14.1; 114.1; 214.1; 314.1; 414.1; 514.1) der ersten Hauptfläche (14; 114; 214; 314; 414; 514) des Zahnrads (10; 110; 210; 310; 410; 510) flächig auf dem ersten Gebiet (12.1; 112.1; 212.1; 312.1; 412.1; 512.1) der zweiten Hauptfläche (12; 112; 212; 312; 412; 512) des anderen Zahnrads (10; 110; 210; 310; 410; 510) aufliegt, und
dass das zweite Gebiet (14.2; 114.2; 214.2; 314.2; 414.2; 514.2) der ersten Hauptfläche (14; 114; 214; 314; 414; 514) des Zahnrads (10; 110; 210; 310; 410; 510) flächig auf dem zweiten Gebiet (12.2; 112.2; 212.2; 312.2; 412.2; 512.2) der zweiten Hauptfläche (12; 112; 212; 312; 412; 512) des anderen Zahnrads (10; 110; 210; 310; 410; 512) aufliegt.

2. Zahnrad (10; 110; 210; 310; 410; 510) nach Anspruch 1, **dadurch gekennzeichnet, dass** sowohl für die erste (14; 114; 214; 314; 414; 514) als auch für die zweite (12; 112; 212; 312; 412; 512) Hauptfläche das zweite Gebiet (114.2, 112.2; 514.2, 512.2) oder, falls das zweite Gebiet (14.2, 12.2; 214.2, 212.2; 414.2, 412.2) aus mehreren separaten Abschnitten (14.2a, 12.2a; 214.2a, 212.2a; 414.2a, 412.2a) zusammengesetzt ist, mindestens einer, vorzugsweise jeder, dieser Abschnitte (14.2a, 12.2a; 214.2a, 212.2a; 414.2a, 412.2a) innerhalb von dem ersten Gebiet (14.1, 12.1; 114.1, 112.1; 214.1, 212.1; 314.1, 312.1; 414.1, 412.1; 514.1, 512.1) liegt.

3. Zahnrad (10; 110; 210; 310; 410; 510) nach Anspruch 2, **dadurch gekennzeichnet, dass** das Zahnrad (10; 110; 210; 310; 410; 510) derart auf das andere Zahnrad (10; 110; 210; 310; 410; 510) der gleichen Gestalt stapelbar ist, dass zwischen den Übergangsabschnitten (18; 118, 121; 218; 418; 518) der ersten Hauptfläche (14; 114; 214; 314; 414; 514) des Zahnrads (10; 110; 210; 310; 410; 510) und den entsprechenden Übergangsabschnitten (19; 119, 122; 219; 419; 519) der zweiten Hauptfläche (12; 112; 212; 312; 412; 512) des anderen Zahnrads (10; 110; 210; 310; 410; 510) jeweils ein Spalt (S) ausgebildet ist, im Falle von Anspruch 2 vorzugsweise ein umlaufender Spalt (S).

4. Zahnrad (10; 110; 210; 310; 410; 510) nach einem der Ansprüche 1 bis 3, **dadurch gekennzeichnet, dass** das Zahnrad (10; 110; 210; 310; 410; 510) derart auf das andere Zahnrad (10; 110; 210; 310; 410; 510) der gleichen Gestalt stapelbar ist, dass die Übergangsabschnitte (19, 18; 119, 118; 219, 218; 319, 318; 419, 418; 519; 518) der ersten Hauptfläche des Zahnrads (14; 114; 214; 314; 414; 514) und der zweiten Hauptfläche (12; 112; 212; 312; 412; 512) des anderen Zahnrads (10; 110; 210; 310; 410; 510) sich nicht flächig berühren, und sich bevorzugt überhaupt nicht berühren.

5. Zahnrad (10; 110; 210; 310; 410; 510) nach Anspruch 3 oder 4, **dadurch gekennzeichnet, dass** im aufeinander gestapelten Zustand die Breite des Spalts (S) zwischen den Übergangsabschnitten (19) der ersten Hauptfläche (14) des Zahnrads (10) und den entsprechenden Übergangsabschnitten (18) der zweiten Hauptfläche (12) des anderen Zahnrads (10) jeweils nicht kleiner ist als das 2,5-fache der Toleranzbreite (δ) für die Dicke (t) oder für die Kontur der Zahnräder (10; 110; 210; 310; 410; 510), oder nicht kleiner ist als 0,2 mm.

6. Zahnrad (10; 210; 310; 410) nach einem der Ansprüche 1 bis 5, **dadurch gekennzeichnet, dass** das zweite Gebiet (14.2, 12.2; 214.2; 212.2; 314.2, 312.2; 414.2, 412.2) der ersten und der zweiten Hauptfläche (14, 12; 214; 212; 314, 312; 414, 412) jeweils aus einer Mehrzahl von separaten Abschnitten (14.2a, 12.2a; 214.2a; 212.2a; 314.2a, 312.2a; 414.2a, 412.2a) zusammengesetzt ist, die vorzugsweise regelmäßig über den Umfang des Zahnrads (10; 210; 310; 410) verteilt sind.

7. Zahnrad (110; 510) nach einem der Ansprüche 1 bis 5, **dadurch gekennzeichnet, dass** sowohl für die erste als auch für die zweite Hauptfläche (114, 112; 514, 512) das zweite Gebiet (114.2, 112.2; 514.2; 512.2) radial innerhalb, vorzugsweise konzentrisch innerhalb von dem ersten Gebiet (114.1, 112.1; 514.1, 512.1) angeordnet ist.

8. Zahnrad (110; 510) nach einem der Ansprüche 1 bis 7, **dadurch gekennzeichnet, dass** sowohl die erste als auch die zweite Hauptfläche (114, 112; 514, 512) ein drittes Gebiet (114.3, 112.3; 514.3, 512.3) aufweist, das mit dem zweiten Gebiet (114.2, 112.2; 514.2; 512.2) der jeweiligen Hauptfläche (114, 112; 514, 512) durch einen weiteren Übergangsabschnitt oder weitere Übergangsabschnitte (122, 121; 522, 521) verbunden und gegenüber dem zweiten Gebiet (114.2, 112.2; 514.2, 512.2) axial versetzt ist, wobei das Zahnrad (110; 510) derart auf das andere Zahnrad (110; 510) der gleichen Gestalt stapelbar ist, dass das dritte Gebiet (114.3; 514.3) der ersten Hauptfläche (114; 514) des Zahnrads (110; 510) flächig auf dem dritten (112.3; 512.3) Gebiet der zweiten Hauptfläche (112; 512) des anderen Zahnrads (110; 510) aufliegt, wobei sich vorzugsweise die weiteren Übergangsabschnitte (122, 121; 522; 521) der ersten Hauptfläche (114; 514) des Zahnrads (110; 510) und der zweiten Hauptfläche (112; 512) des anderen Zahnrads (110; 510) nicht flächig berühren.

9. Zahnrad (110) nach Anspruch 7 und 8, **dadurch gekennzeichnet, dass** sowohl für die erste als auch für die zweite Hauptfläche (114, 112) das dritte Gebiet (114.3, 112.3) radial innerhalb, bevorzugt konzentrisch innerhalb von dem zweiten Gebiet (114.2, 112.2) angeordnet ist.

10. Zahnrad (10; 110; 210; 310; 410; 510) nach einem der vorhergehenden Ansprüche, **dadurch gekennzeichnet, dass** es eine Befestigungsstruktur (15; 115; 215; 315; 415; 515) umfasst, die an einem planen Abschnitt der ersten und zweiten Hauptfläche vorgesehen ist, vorzugsweise in der Form von einem oder mehreren Befestigungslöchern oder Ausnehmungen für Schrauben (666), Stifte oder Nieten (399).

11. Zahnrad (210; 410) nach Anspruch 10,
**dadurch gekennzeichnet,**
**dass** das zweite Gebiet (214.2, 212.2; 414.2; 412.2) der ersten und der zweiten Hauptfläche (214, 212; 414, 412) aus jeweils einer Mehrzahl von separaten Abschnitten (214.2a, 212.2a; 414.2a; 412.2a) zusammengesetzt ist, und die separaten Abschnitte (214.2a, 212.2a; 414.2a; 412.2a) des zweiten Gebiets (214.2; 212.2; 414.2; 412.2) und die zugehörigen Übergangsabschnitte (218, 219; 418; 419) der ersten und zweiten Hauptfläche (214, 212; 414, 412) so ausgebildet sind, dass sie jeweils topfartige, in einer Draufsicht vorzugsweise kreisförmige Vertiefungen oder Erhebungen (252; 452) umfassen oder bilden, in denen vorzugsweise jeweils eine Befestigungsöffnung (215; 415) als Befestigungsstruktur vorgesehen ist.

12. Zahnrad (210; 410) nach Anspruch 8 oder 9,
**dadurch gekennzeichnet,**
**dass** es eine Befestigungsstruktur (515) umfasst, die an einem planen Abschnitt der ersten und zweiten Hauptfläche vorgesehen ist,
vorzugsweise in der Form von einem oder mehreren Befestigungslöchern oder Ausnehmungen für Schrauben (666), Stifte oder Nieten (399), und
**dass** das dritte Gebiet (514.3; 512.3)der ersten und der zweiten Hauptfläche (514, 512) aus jeweils einer Mehrzahl von separaten Abschnitten (514.3a, 512.3a) zusammengesetzt ist, und die separaten Abschnitte (514.3a. 512.3a) des dritten Gebiets (514.3, 512.3) und die zugehörigen Übergangsabschnitte (521, 522, 525, 526) der ersten und zweiten Hauptfläche (514, 512) so ausgebildet sind, dass sie jeweils topfartige, in einer Draufsicht vorzugsweise kreisförmige Vertiefungen oder Erhebungen (552) umfassen oder bilden, in denen vorzugsweise jeweils eine Befestigungsöffnung (515) als Befestigungsstruktur vorgesehen ist.

13. Mehrfach-Ritzelanordnung (888; 999) für einen Fahrrad-Antrieb,
umfassend mehrere, drehfest aneinander montierte Zahnräder (210, 310, 410; 510, 599),
**dadurch gekennzeichnet,**
**dass** wenigstens eines (510), vorzugsweise jedes der Zahnräder (210, 310; 410; 510) ein Zahnrad nach einem der vorhergehenden Ansprüche ist.

14. Mehrfach-Ritzelanordnung (888) nach Anspruch 13,
**dadurch gekennzeichnet,**
**dass** sie aus drei Zahnrädern (210, 310; 410) gebildet ist, wobei die beiden äußeren Zahnräder (210, 410) Zahnräder nach Anspruch 11 oder 12 sind, bei denen die Vertiefungen oder Erhebungen (252; 452) als Abstandhalter zwischen den äußeren Zahnrädern (210, 410) und dem mittleren Zahnrad (310) fungieren.

15. Verfahren zur Wärmebehandlung von Zahnrädern (10; 110; 210; 310; 410; 510),
**dadurch gekennzeichnet,**
**dass** es die folgenden Schritte umfasst:
Stapeln mehrerer gleichartiger Zahnräder (10; 110; 210; 310; 410; 510) nach einem der Ansprüche 1 bis 12, und Wärmebehandlung der Zahnräder (10; 110; 210; 310; 410; 510) in gestapeltem Zustand.

## Claims

1. Sprocket wheel (10; 110; 210; 310; 410; 510) for a bicycle drive, comprising
a first main surface (14; 114; 214; 314; 414; 514), which is flat in some section or sections, a second main surface (12; 112; 212; 312; 412; 512), which is situated opposite the first main surface (14; 114; 214; 314; 414; 514), is flat in some section or sections and extends parallel to the first main surface (14; 114; 214; 314; 414; 514), at least in some section or sections, and an outer circumferential surface (16; 116; 216; 316; 416; 516), which connects the first (14; 114; 214; 314; 414; 514) and the second (12; 112; 212; 312; 412; 512) main surfaces to one another and on which toothing (116z; 216z; 316z; 416z; 516t) is provided, wherein the first (14; 114; 214; 314; 414; 514) and the second main surfaces (12; 112; 212; 312; 412; 512) each comprise a flat first area (14.1, 12.1; 114.1, 112.1; 214.1, 212.1; 314.1, 312.1; 414.1, 412.1; 514.1, 512.1) and a flat second area (14.2, 12.2; 114.2, 112.2; 214.2, 212.2; 314.2, 312.2; 414.2, 412.2; 514.2, 512.2), which is offset axially relative to the first area and is connected to the first area (14.1, 12.1; 114.1, 112.1; 214.1, 212.1; 314.1, 312.1; 414.1, 412.1; 514.1, 512.1) by one or more transitional sections (18, 19; 118, 119; 218, 219; 318, 319; 418, 419; 518, 519),
wherein the first area (14.1; 114.1; 214.1; 314.1; 414.1; 514.1) of the first main surface (14; 114; 214; 314; 414; 514) is arranged opposite the first area (12.1; 112.1; 212.1; 312.1; 412.1; 512.1) of the second main surface (12; 112; 212; 312; 412; 512), at least in some section or sections, and the second area (14.2; 114.2; 214.2; 314.2; 414.2; 514.2) of the first main surface (14; 114; 214; 314; 414; 514) is arranged opposite the second area (12.2; 112.2; 212.2; 312.2; 412.2; 512.2) of the second main surface (12; 112; 212; 312; 412; 512), at least in some section or sections,
**characterized in that** the sprocket wheel (10; 110; 210; 310; 410; 510) can be stacked on another sprocket wheel (10; 110; 210; 310; 410; 510) of the same configuration in such a way that the first area (14.1; 114.1; 214.1; 314.1; 414.1; 514.1) of the first main surface (14; 114; 214; 314; 414; 514) of the sprocket wheel (10; 110; 210; 310; 410; 510) rests over an extended area on the first area (12.1; 112.1; 212.1; 312.1; 412.1; 512.1) of the second main surface (12; 112; 212; 312; 412; 512) of the other sprocket wheel (10; 110; 210; 310; 410; 510), and
**in that** the second area (14.2; 114.2; 214.2; 314.2; 414.2; 514.2) of the first main surface (14; 114; 214; 314; 414; 514) of the sprocket wheel (10; 110; 210; 310; 410; 510) rests over an extended area on the second area (12.2; 112.2; 212.2; 312.2; 412.2; 512.2) of the second main surface (12; 112; 212; 312; 412; 512) of the other sprocket wheel (10; 110; 210; 310; 410; 512).

2. Sprocket wheel (10; 110; 210; 310; 410; 510) according to Claim 1, **characterized in that,** both in the case of the first (14; 114; 214; 314; 414; 514) and of the second (12; 112; 212; 312; 412; 512) main surface, the second area (114.2, 112.2; 514.2, 512.2) or, if the second area (14.2, 12.2; 214.2, 212.2; 414.2, 412.2) is composed of a plurality of separate sections (14.2a, 12.2a; 214.2a, 212.2a; 414.2a, 412.2a), at least one, preferably each, of these sections (14.2a, 12.2a; 214.2a, 212.2a; 414.2a, 412.2a) lies within the first area (14.1, 12.1; 114.1, 112.1; 214.1, 212.1; 314.1, 312.1; 414.1, 412.1; 514.1, 512.1).

3. Sprocket wheel (10; 110; 210; 310; 410; 510) according to Claim 2, **characterized in that** the sprocket wheel (10; 110; 210; 310; 410; 510) can be stacked on the other sprocket wheel (10; 110; 210; 310; 410; 510) of the same configuration in such a way that a gap (S), in the case of Claim 2 preferably an encircling gap (S), is formed between each of the transitional sections (18; 118, 121; 218; 418; 518) of the first main surface (14; 114; 214; 314; 414; 514) of the sprocket wheel (10; 110; 210; 310; 410; 510) and the corresponding transitional sections (19; 119, 122; 219; 419; 519) of the second main surface (12; 112; 212; 312; 412; 512) of the other sprocket wheel (10; 110; 210; 310; 410; 510).

4. Sprocket wheel (10; 110; 210; 310; 410; 510) according to one of Claims 1 to 3, **characterized in that** the sprocket wheel (10; 110; 210; 310; 410; 510) can be stacked on the other sprocket wheel (10; 110; 210; 310; 410; 510) of the same configuration in such a way that the transitional sections (19, 18; 119, 118; 219, 218; 319, 318; 419, 418; 519; 518) of the first main surface of the sprocket wheel (14; 114; 214; 314; 414; 514) and of the second main surface (12; 112; 212; 312; 412; 512) of the other sprocket wheel (10; 110; 210; 310; 410; 510) do not touch over an extended area and preferably do not touch at all.

5. Sprocket wheel (10; 110; 210; 310; 410; 510) according to Claim 3 or 4, **characterized in that,** when stacked, the width of the gap (S) between the transitional sections (19) of the first main surface (14) of the sprocket wheel (10) and the corresponding transitional sections (18) of the second main surface (12) of the other sprocket wheel (10) is in each case not less than 2.5 times the tolerance range (δ) for the thickness (t) or for the contour of the sprocket wheels (10; 110; 210; 310; 410; 510), or is not less than 0.2 mm.

6. Sprocket wheel (10; 210; 310; 410) according to one of Claims 1 to 5, **characterized in that** the second area (14.2, 12.2; 214.2; 212.2; 314.2, 312.2; 414.2, 412.2) of the first and of the second main surface (14, 12; 214; 212; 314, 312; 414, 412) is in each case composed of a plurality of separate sections (14.2a, 12.2a; 214.2a; 212.2a; 314.2a, 312.2a; 414.2a, 412.2a), which are preferably distributed at regular intervals over the circumference of the sprocket wheel (10; 210; 310; 410).

7. Sprocket wheel (110; 510) according to one of Claims 1 to 5, **characterized in that,** both in the case of the first and of the second main surface (114, 112; 514, 512), the second area (114.2, 112.2; 514.2; 512.2) is arranged radially within, preferably concentrically within, the first area (114.1, 112.1; 514.1, 512.1).

8. Sprocket wheel (110; 510) according to one of Claims 1 to 7, **characterized in that** both the first and the second main surfaces (114, 112; 514, 512) have a third area (114.3, 112.3; 514.3, 512.3), which is connected to the second area (114.2, 112.2; 514.2; 512.2) of the respective main surface (114, 112; 514, 512) by a further transitional section or further transitional sections (122, 121; 522, 521) and is offset axially relative to the second area (114.2, 112.2; 514.2, 512.2), wherein the sprocket wheel (110; 510) can be stacked on the other sprocket wheel (110; 510) of the same configuration in such a way that the third area (114.3; 514.3) of the first main surface (114; 514) of the sprocket wheel (110; 510) rests over an extended area on the third (112.3; 512.3) area of the second main surface (112; 512) of the other sprocket wheel (110; 510), wherein the further transitional sections (122, 121; 522; 521) of the first main surface (114; 514) of the sprocket wheel (110; 510) and of the second main surface (112; 512) of the other sprocket wheel (110; 510) preferably do not touch over an extended area.

9. Sprocket wheel (110) according to Claim 7 and 8, **characterized in that** both in the case of the first and of the second main surface (114, 112), the third area (114.3, 112.3) is arranged radially within, preferably concentrically within, the second area (114.2, 112.2).

10. Sprocket wheel (10; 110; 210; 310; 410; 510) according to one of the preceding claims, **characterized in that** it comprises a fastening structure (15; 115; 215; 315; 415; 515), which is provided on a flat section of the first and second main surface, preferably in the form of one or more fastening holes or apertures for screws (666), pins or rivets (399).

11. Sprocket wheel (210; 410) according to Claim 10, **characterized**
**in that** the second area (214.2, 212.2; 414.2; 412.2) of the first and of the second main surface (214, 212; 414, 412) is composed of a plurality of separate sections (214.2a, 212.2a; 414.2a; 412.2a), and the separate sections (214.2a, 212.2a; 414.2a; 412.2a) of the second area (214.2; 212.2; 414.2; 412.2) and the associated transitional sections (218, 219; 418; 419) of the first and second main surface (214, 212; 414, 412) are designed in such a way that they each comprise or form cup-type depressions or elevations (252; 452), which are preferably circular in plan view and in each of which a fastening opening (215; 415) is preferably provided as a fastening structure.

12. Sprocket wheel (210; 410) according to Claim 8 or 9, **characterized**
**in that** said sprocket wheel comprises a fastening structure (515) which is provided on a flat section of the first and second main surface,
preferably in the form of one or more fastening holes or apertures for screws (666), pins or rivets (399), and
**in that** the third area (514.3; 512.3) of the first and of the second main surface (514, 512) are each composed of a plurality of separate sections (514.3a, 512.3a), and the separate sections (514.3a, 512.3a) of the third area (514.3, 512.3) and the associated transitional sections (521, 522, 525, 526) of the first and second main surface (514, 512) are designed in such a way that they each comprise or form cup-type depressions or elevations (552), which are preferably circular in plan view and in each of which a fastening opening (515) is preferably provided as a fastening structure.

13. Multi-pinion arrangement (888; 999) for a bicycle drive, comprising a plurality of sprocket wheels (210, 310, 410; 510, 599), which are mounted upon one another for conjoint rotation,
**characterized**
**in that** at least one (510), preferably each, of the sprocket wheels (210, 310; 410; 510) is a sprocket wheel according to one of the preceding claims.

14. Multi-pinion arrangement (888) according to Claim 13, **characterized**
**in that** it is formed from three sprocket wheels (210, 310; 410) wherein the two outer sprocket wheels (210, 410) are sprocket wheels according to Claim 11 or 12, on which the depressions or elevations (252; 452) serve as spacers between the outer sprocket wheels (210, 410) and the central sprocket wheel (310).

15. Method for heat treating sprocket wheels (10; 110; 210; 310; 410; 510), **characterized**
**in that** it comprises the following steps:
stacking a plurality of sprocket wheels (10; 110; 210; 310; 410; 510) of the same type according to one of Claims 1 to 12, and heat treating the sprocket wheels (10; 110; 210; 310; 410; 510) in the stacked state.

## Revendications

1. Roue dentée (10 ; 110 ; 210 ; 310 ; 410 ; 510) pour un entraînement de bicyclette, comprenant
une première surface principale partiellement plane (14 ; 114 ; 214 ; 314 ; 414 ; 514), une deuxième surface principale partiellement plane (12 ; 112 ; 212 ; 312 ; 412 ; 512) opposée à la première surface principale (14 ; 114 ; 214 ; 314 ; 414 ; 514), au moins partiellement parallèle à la première surface principale (14 ; 114 ; 214 ; 314 ; 414 ; 514), et une surface de circonférence extérieure (16 ; 116 ; 216 ; 316 ; 416 ; 516), laquelle raccorde la première (14 ; 114 ; 214 ; 314 ; 414 ; 514) et la deuxième surfaces principales (12 ; 112 ; 212 ; 312 ; 412 ; 512) l'une à l'autre et sur laquelle un engrenage (116z ; 216z ; 316z ; 416z ; 516t) est prévu, dans laquelle la première (14 ; 114 ; 214 ; 314 ; 414 ; 514) et la deuxième surfaces principales (12 ; 112 ; 212 ; 312 ; 412 ; 512) comprennent respectivement un premier domaine plan (14.1, 12.1 ; 114.1, 112.1 ; 214.1, 212.1 ; 314.1, 312.1 ; 414.1, 412.1 ; 514.1, 512.1) et un deuxième domaine plan (14.2, 12.2 ; 114.2, 112.2 ; 214.2, 212.2 ; 314.2, 312.2 ; 414.2, 412.2 ; 514.2, 512.2) axialement opposé au premier domaine, lequel est raccordé au premier domaine (14.1, 12.1 ; 114.1, 112.1 ; 214.1, 212.1 ; 314.1, 312.1 ; 414.1, 412.1 ; 514.1, 512.1) par une ou plusieurs sections de transmission (18, 19 ; 118, 119 ; 218, 219 ; 318, 319 ; 418, 419 ; 518, 519),
dans laquelle le premier domaine (14.1 ; 114.1 ; 214.1 ; 314.1 ; 414.1 ; 514.1) de la première surface principale (14 ; 114 ; 214 ; 314 ; 414 ; 514) est agencé au moins partiellement opposé au premier domaine (12.1 ; 112.1 ; 212.1 ; 312.1 ; 412.1 ; 512.1) de la deuxième surface principale (12 ; 112 ; 212 ; 312 ; 412 ; 512), et le deuxième domaine (14.2 ; 114.2 ; 214.2 ; 314.2 ; 414.2 ; 514.2) de la première surface principale (14 ; 114 ; 214 ; 314 ; 414 ; 514) est agencé au moins partiellement opposé au deuxième domaine (12.2 ; 112.2 ; 212.2 ; 312.2 ; 412.2 ; 512.2) de la deuxième surface principale (12 ; 112 ; 212 ; 312 ; 412 ; 512)
**caractérisée en ce que** la roue dentée (10 ; 110 ; 210 ; 310 ; 410 ; 510) est empilable sur une autre roue dentée (10 ; 110 ; 210 ; 310 ; 410 ; 510) de la même forme de telle sorte que le premier domaine (14.1 ; 114.1 ; 214.1 ; 314.1 ; 414.1 ; 514.1) de la première surface principale (14 ; 114 ; 214 ; 314 ; 414 ; 514) de la roue dentée (10 ; 110 ; 210 ; 310 ; 410 ; 510) repose à plat sur le premier domaine (12.1 ; 112.1 ; 212.1 ; 312.1 ; 412.1 ; 512.1) de la deuxième surface principale (12 ; 112 ; 212 ; 312 ; 412 ; 512) de l'autre roue dentée (10 ; 110 ; 210 ; 310 ; 410 ; 510), et
**en ce que** le deuxième domaine (14.2 ; 114.2 ; 214.2 ; 314.2 ; 414.2 ; 514.2) de la première surface principale (14 ; 114 ; 214 ; 314 ; 414 ; 514) de la roue dentée (10 ; 110 ; 210 ; 310 ; 410 ; 510) repose à plat sur le deuxième domaine (12.2 ; 112.2 ; 212.2 ; 312.2 ; 412.2 ; 512.2) de la deuxième surface principale (12 ; 112 ; 212 ; 312 ; 412 ; 512) de l'autre roue dentée (10 ; 110 ; 210 ; 310 ; 410 ; 510).

2. Roue dentée (10 ; 110 ; 210 ; 310 ; 410 ; 510) selon la revendication 1, **caractérisée en ce que** tant pour la première (14 ; 114 ; 214 ; 314 ; 414 ; 514) que pour la deuxième (12 ; 112 ; 212 ; 312 ; 412 ; 512) surface principale, le deuxième domaine (114.2, 112.2 ; 514.2, 512.2) ou, au cas où le deuxième domaine (14.2, 12.2 ; 214.2, 212.2 ; 414.2, 412.2) est composé de plusieurs sections séparées (14.2a, 12.2a ; 214.2a, 212.2a ; 414.2a, 412.2a), au moins une, de préférence chacune, de ce sections (14.2a, 12.2a ; 214.2a, 212.2a ; 414.2a, 412.2a) est à l'intérieur du premier domaine (14.1, 12.1 ; 114.1, 112.1 ; 214.1, 212.1 ; 314.1, 312.1 ; 414.1, 412.1 ; 514.1, 512.1).

3. Roue dentée (10 ; 110 ; 210 ; 310 ; 410 ; 510) selon la revendication 2, **caractérisée en ce que** la roue dentée (10 ; 110 ; 210 ; 310 ; 410 ; 510) est empilable sur l'autre roue dentée (10 ; 110 ; 210 ; 310 ; 410 ; 510) de la même forme de telle sorte qu'un espace (S) est formé respectivement entre les sections de transmission (18 ; 118 ; 121 ; 218 ; 418 ; 518) de la première surface principale (14 ; 114 ; 214 ; 314 ; 414 ; 514) de la roue dentée (10 ; 110 ; 210 ; 310 ; 410 ; 510) et les sections de transmission correspondantes (19 ; 119 ; 122 ; 219 ; 419 ; 519) de la deuxième surface principale (12 ; 112 ; 212 ; 312 ; 412 ; 512) de l'autre roue dentée (10 ; 110 ; 210 ; 310 ; 410 ; 510), de préférence un espace (S) sur le pourtour dans le cas de la revendication 2.

4. Roue dentée (10 ; 110 ; 210 ; 310 ; 410 ; 510) selon l'une des revendications 1 à 3, **caractérisée en ce que** la roue dentée (10 ; 110 ; 210 ; 310 ; 410 ; 510) est empilable sur l'autre roue dentée (10 ; 110 ; 210 ; 310 ; 410 ; 510) de la même forme de telle sorte que les sections de transmission (19, 18 ; 119, 118 ; 219, 218 ; 319, 318 ; 419, 418 ; 519 ; 518) de la première surface principale (14 ; 114 ; 214 ; 314 ; 414 ; 514) de la roue dentée et de la deuxième surface principale (12 ; 112 ; 212 ; 312 ; 412 ; 512) de l'autre roue dentée (10 ; 110 ; 210 ; 310 ; 410 ; 510) ne se touchent pas à plat, et de préférence ne se touchent pas du tout.

5. Roue dentée (10 ; 110 ; 210 ; 310 ; 410 ; 510) selon la revendication 3 ou 4, **caractérisée en ce que** dans un état où elles sont empilées l'une sur l'autre la largeur de l'espace (S) entre les sections de transmission (19) de la première surface principale (14) de la route dentée (10) et les sections de transmission correspondantes (18) de la deuxième surface principale (12) de l'autre route dentée (10) n'est respectivement pas inférieure à 2,5 fois la largeur de tolérance (δ) pour l'épaisseur (t) ou pour le contour des roues dentées (10 ; 110 ; 210 ; 310 ; 410 ; 510), ou n'est pas inférieure à 0,2 mm.

6. Roue dentée (10 ; 210 ; 310 ; 410) selon l'une des revendications 1 à 5, **caractérisée en ce que** le deuxième domaine (14.2, 12.2 ; 214.2 ; 212.2 ; 314.2, 312.2 ; 414.2, 412.2) de la première et de la deuxième surface principale (14, 12 ; 214 ; 212 ; 314, 312 ; 414, 412) est respectivement composé d'une pluralité de sections séparées (14.2a, 12.2a ; 214.2a ; 212.2a ; 314.2a, 312.2a ; 414.2a, 412.2a), lesquelles sont de préférence régulièrement distribuées sur le pourtour de la roue dentée (10 ; 210 ; 310 ; 410).

7. Roue dentée (110 ; 510) selon l'une des revendications 1 à 5, **caractérisée en ce que** tant pour la première que pour la deuxième surface principale (114, 112 ; 514, 512), le deuxième domaine (114.2, 112.2 ; 514.2 ; 512.2) est agencé radialement à l'intérieur du premier domaine (114.1, 112.1 ; 514.1, 512.1), de préférence de manière concentrique.

8. Roue dentée (110 ; 510) selon l'une des revendications 1 à 7, **caractérisée en ce que** tant la première que la deuxième surface principale (114, 112 ; 514, 512) comporte un troisième domaine (114.3, 112.3 ; 514.3, 512.3), lequel est raccordé au deuxième domaine (114.2, 112.2 ; 514.2 ; 512.2) de la surface principale respective (114, 112 ; 514, 512) par une ou des section(s) de transmission supplémentaire(s) (122, 121 ; 522, 521) et est arrangé en opposition axiale par rapport au deuxième domaine (114.2, 112.2 ; 514.2, 512.2), dans laquelle la roue dentée (110 ; 510) est empilable sur l'autre roue dentée (110 ; 510) de la même forme de telle sorte que le troisième domaine (114.3 ; 514.3) de la première surface principale (114 ; 514) de la roue dentée (110 ; 510) repose à plat sur le troisième domaine (112.3 ; 512.3) de la deuxième surface principale (112 ; 512) de l'autre roue dentée (110 ; 510), dans laquelle de préférence les sections de transmission supplémentaires (122, 121 ; 522 ; 521) de la première surface principale (114 ; 514) de la roue dentée (110 ; 510) et de la deuxième surface principale (112 ; 512) de l'autre roue dentée (110 ; 510) ne se touchent pas à plat.

9. Roue dentée (110) selon les revendications 7 et 8, **caractérisée en ce que** tant pour la deuxième que pour la deuxième surface principale (114,112), le troisième domaine (114.3, 112.3) est agencé radialement à l'intérieur du deuxième domaine (114.2, 112.2), de préférence de manière concentrique.

10. Roue dentée (10 ; 110 ; 210 ; 310 ; 410 ; 510) selon l'une des revendications précédentes, **caractérisée en ce qu'**elle comprend une structure de fixation (15 ; 115 ; 215 ; 315 ; 415 ; 515), laquelle est prévue sur une section plane de la première et de la deuxième surface principale, de préférence sous la forme d'un ou plusieurs trous de fixations ou des cavités pour des vis (666), des tiges ou des rivets (399).

11. Roue dentée (210 ; 410) selon la revendication 10, **caractérisée en ce que** le deuxième domaine (214.2, 212.2 ; 414.2 ; 412.2) de la première et de la deuxième surface principale (214, 212 ; 414, 412) est respectivement composé d'une pluralité de sections séparées (214.2a, 212.2a ; 414.2a ; 412.2a), et les sections séparées (214.2a, 212.2a ; 414.2a ; 412.2a) du deuxième domaine (214.2, 212.2 ; 414.2 ; 412.2) et les sections de transmissions s'y rattachant (218, 219 ; 418 ; 419) de la première et de la deuxième surface principale (214, 212 ; 414, 412) sont conçues de telle sorte qu'elles comprennent ou forment respectivement des dépressions ou des élévations (252 ; 452) en forme de pot, de préférence circulaires vue de dessus, où est prévue de préférence respectivement une ouverture de fixation (215 ; 415) comme structure de fixation.

12. Roue dentée (210 ; 410) selon la revendication 8 ou 9, **caractérisée en ce qu'**elle comprend une structure de fixation (515), laquelle est prévue sur une section plane de la première et de la deuxième surface principale,
de préférence sous la forme d'un ou plusieurs trous de fixations ou cavités pour des vis (666), des tiges ou des rivets (399), et
**en ce que** le troisième domaine (514.3 ; 512.3) de la première et de la deuxième surface principale (514, 512) est respectivement composé d'une pluralité de sections séparées (514,3a, 512.3a), et les sections séparées (514,3a, 512.3a) du troisième domaine (514.3, 512.3) et les sections de transmissions s'y rattachant (521, 522, 525,526) de la première et de la deuxième surface principale (514, 512) sont conçues de telle sorte qu'elles comprennent ou forment respectivement des dépressions ou des élévations (552) en forme de pot, de préférence circulaires vue de dessus, où est prévue de préférence respectivement une ouverture de fixation (515) comme structure de fixation.

13. Agencement de pignons multiples (888 ; 999) pour un entraînement de bicyclette, comprenant plusieurs roues dentées (210, 310, 410 ; 510, 599) montées sans rotation possible l'une par rapport à l'autre, **caractérisé en ce qu'**au moins une (510), de préférence chacune des roues dentées (210, 310 ; 410 ; 510) est une roue dentée selon l'une des revendications précédentes.

14. Agencement de pignons multiples (888) selon la revendication 13, **caractérisé en ce qu'**il est formé de trois roues dentées (210, 310 ; 410), dans lequel les deux roues dentées extérieures (210, 410) sont des roues dentées selon la revendication 11 ou 12, où les dépressions ou les élévations (252 ; 452) fonctionnent comme écarteurs entre les roues dentées extérieures (210, 410) et la roue dentée centrale (310).

15. Procédé de traitement thermique de roues dentées (10 ; 110 ; 210 ; 310 ; 410 ; 510), **caractérisé en ce qu'**il comporte les étapes suivantes :
Empilage de plusieurs roues dentées similaires (10 ; 110 ; 210 ; 310 ; 410 ; 510) selon l'une des revendications 1 à 12 et traitement thermique des roues dentées (10 ; 110 ; 210 ; 310 ; 410 ; 510) dans l'état empilé.
